# EUROPEAN PATENT APPLICATION

(11) **EP 4 848 109 A1**
(43) Date of publication of application: **02.12.2026**
(21) Application number: 25275045.0
(22) Date of filing: 29.05.2025
(51) Int. Cl.: G06F 16/901, G06F 16/9032

(54) **METHODS AND SYSTEMS FOR LARGE LANGUAGE MODEL DATABASES**

(71) Applicant: Helsing GmbH, 81671 Munich (DE)
(72) Inventor: COLLODI, Lorenzo, 81671 Munich (DE); KUCIK, Andrezj, 81671 Munich (DE)
(74) Representative: Haseltine Lake Kempner LLP

(57) **Abstract**

There is provided a computer-implemented method of pre-processing data in a hypothesis database configured to be queried by a large language model. The method comprising retrieving a subset of direct hypotheses stored in the hypothesis database, the hypothesis database storing a plurality of direct hypotheses wherein each direct hypothesis comprises a textual description relating to associated source data. The method further comprising processing, by a machine learning model, the subset of direct hypotheses to create an associated report hypothesis, the report hypothesis comprising a textual summary of the textual descriptions of the direct hypotheses of the subset of direct hypotheses. The method further comprising storing the report hypothesis in the hypothesis database such that it can be used by the large language model to output answers to user queries.

## Description

### Field of the Invention

The present invention relates to databases which large language models (LLM) access and use to answer user queries, and in particular to structuring, accessing and using the data in said databases to respond to user queries.

### Background of the Invention

LLMs are often used as an interface between a user and a particular data source stored in a database, in particular because the LLM allows for human readable inputs using which the user can query the database, and human readable outputs in providing answers to the user.

However, existing arrangements suffer from a number of distinct disadvantages.

First, the data in the database has to be in a text format otherwise the LLM cannot process it. However, many data formats are not text format. For instance, data about the real world - such as images, audio, video etc. - often does not come in text format. Converting the original source data, such as image data, into a format which the LLM can understand can be achieved in a number of ways, such as using a Visual Language Model (VLM) to create text descriptions of images. In this way the information in the other data formats, such as image data, can be processed by the LLM and the user can thereby ask questions relating to the original source data. However, there remains difficulties in relation to how to determine the granularity with which to break-down the original source data into chunks or pieces of a size sufficient to allow the system to provide meaningful answers to be provided in response to user queries. The granularity may be use-case and context specific, i.e. related to what the LLM and database are being used to do and what multi-modal data the database is being required to process. Further, there remains difficulties in that such conversion creates very large quantities of text data as derived from the original source data, as the conversion to text attempts to maintain (not lose) as much of the information in the original data format as possible, but to convert it into text. As can be seen with the example of an image, there may be a very large amount of description needed to convey the content of an image. This large quantity of data, and in differing formats, presents processing challenges for LLMs.

Second, partly as a result of the above, databases often have very large datasets, and this is particularly true of databases based on multi-modal input data. However, LLMs can only process a fixed context window. Accordingly, whilst a database may contain a large amount of data relevant to a particular user query, it is constrained by the context window as to how much data it can process and return. As such, this can lead to incomplete and inaccurate answers to user queries, as only a partial subset of the data relevant to a user query has been accessed and processed by the LLM.

Third, even if a context window for a particular LLM was very large, this would then necessitate large processing times to process all the relevant data. Hence there is a trade-off between the size of the context window and the processing time: if you want more data to be processed, you need to wait longer. Again, this is particularly problematic for some data sets. By way of example, satellite images are very large and contain lots of detail, and hence textual descriptions associated with satellite images can be very lengthy causing processing information associated with any particular image to be a very resource intensive task.

Accordingly, it may be desirable to provide improved methods and systems for storing and processing data in databases to be accessed by LLMs, to allow for improved speed of access, to account for limited context windows, and/or to provide for improved accuracy responses, especially in databases based on multi-modal input data.

Certain aspects of the present disclosure and their embodiments may provide solutions to these or other challenges.

### Statement of the Invention

Aspects of the invention are defined by the accompanying claims. Preferred optional features are defined in the dependent claims.

According to an aspect there is provided a computer-implemented method of pre-processing data in a hypothesis database configured to be queried by a large language model. The method comprising: retrieving a subset of direct hypotheses stored in the hypothesis database, the hypothesis database storing a plurality of direct hypotheses wherein each direct hypothesis comprises a textual description relating to associated source data; processing, by a machine learning model, the subset of direct hypotheses to create an associated report hypothesis, the report hypothesis comprising a textual summary of the textual descriptions of the direct hypotheses of the subset of direct hypotheses; storing the report hypothesis in the hypothesis database such that it can be used by the large language model to output answers to user queries.

The method may further comprise subsequently using the report hypothesis by the large language model to output answers to user queries.

In a specific embodiment, the computer-implemented method may further comprise: retrieving a plurality of report hypotheses stored in the database, each report hypothesis created in accordance with the method of pre-processing of the aspect; processing, by the machine learning model, the plurality of report hypotheses to create a further report hypothesis, the further report hypothesis comprising a textual summary of the textual summaries of the plurality of report hypotheses; and storing the further report hypothesis in the hypothesis database such that it can be used by the large language model to output answers to user queries.

In a specific embodiment, method may further comprise: retrieving a plurality of direct hypotheses stored in the database; wherein the step of processing further comprises processing the plurality of direct hypotheses in addition to the plurality of report hypotheses to create the further report hypothesis, the further report hypothesis thereby comprising a textual summary of the textual summaries of the plurality of report hypotheses combined with the textual description of the direct hypotheses.

In a specific embodiment, the method may further comprise: wherein each source data comprises region data defining the location region the source data relates to, and time data defining the timepoint the source data was captured; and wherein the textual description of each direct hypothesis comprises a description of a time, a location region and an object or event of interest in the particular associated source data, and wherein the textual summary of each report hypothesis comprises a description of at least one time, at least one location region and at least one object or event of interest in the associated subset of direct hypotheses.

In a specific embodiment, the method may further comprise: wherein the source data is sensor data, optionally image data, and optionally wherein the image data is from a satellite or unmanned aerial vehicle (UAV).

In a specific embodiment, the method may further comprise: wherein the subset of direct hypotheses in the created report hypothesis, and/or the plurality of report hypotheses in the created further report hypothesis, relates to at least one of: a particular region range comprising at least one location region associated with at least one source data; and a particular time range comprising at least one timepoint associated with at least one source data; and wherein determining which direct hypotheses to include in the subset of direct hypotheses comprises determining which direct hypotheses relate to the at least one of the particular region range and/or particular time range based on the textual descriptions of the direct hypotheses; and/or wherein determining which report hypotheses to include in the plurality of report hypotheses comprises determining which reports hypotheses relate to the at least one of the particular region range and/or particular time range based on the textual summaries of the report hypotheses.

In a specific embodiment, the method may further comprise: wherein when the subset of direct hypotheses and/or the plurality of report hypotheses relate to a particular region range and a particular time range comprising a plurality of timepoints associated with a plurality of source data, the determining which direct hypotheses to include and/or which report hypotheses to include further comprises determining a time-space horizon of hypotheses comprising: for each timepoint in the time range, determining a neighbourhood of hypotheses comprising direct hypotheses and/or report hypotheses relating to location regions in the vicinity of the particular region range, wherein the size and/or shape of the neighbourhood at each timepoint is variably determined based on a criterion of interest.

In a specific embodiment, the method may further comprise: wherein the criterion of interest is at least one of an object of interest, an event of interest, or a location region of interest.

In a specific embodiment, the method may further comprise: wherein the size and/or shape of the neighbourhood is increased by a factor depending on how old the timepoint is, for instance the factor is linear or exponential.

In a specific embodiment, the method may further comprise: wherein the number of direct hypotheses in the subset of direct hypotheses and/or report hypotheses in the further report hypothesis is determined based on the context window of the large language model, and in particular on determining whether the textual summary of the report hypothesis generated based on the textual descriptions of the subset of hypotheses is less than or equal to the context window and/or on whether the textual summary of the further report hypothesis, generated based on the textual summaries of the of the plurality of report hypotheses, is less than or equal to the context window.

In a specific embodiment, the method may further comprise: when it is determined that the textual summary of the report hypothesis generated based on the textual descriptions of the subset of hypotheses is more than the context window, and/or it is determined the textual summary of the further report hypothesis, generated based on the textual summaries of the of the plurality of subset report hypotheses, is more than the context window, then: creating an intermediate report hypothesis including a subset of the subset of direct hypotheses, and/or a subset of the report hypotheses; and creating the further report based on the intermediate report and the remaining direct hypotheses and/or report hypotheses.

In a specific embodiment, the method may further comprise: truncating the report hypothesis or further report hypotheses to fit within the context window.

In a specific embodiment, the method may further comprise: wherein the direct hypotheses and report hypotheses are created from the source data using a second or the same machine learning model configured to convert the source data into the associated textual descriptions.

In a specific embodiment, the method may further comprise: wherein when the source data is image data, the second machine learning model is a visual language model.

In a specific embodiment, the method may further comprise: wherein at least one report hypothesis in the database may be a human created report input into the system, and/or wherein at least one report hypothesis in the database is a report from another system such as a historical database of reports.

In a specific embodiment, the method may further comprise: receiving new direct hypotheses created from new source data; and iteratively performing the pre-processing method of the aspect on subsets of direct hypotheses comprising the new direct hypotheses. Optionally, further comprising receiving new source data, and creating the new direct hypotheses from the new source data.

In a specific embodiment, the method may further comprise: wherein each direct hypothesis has associated metadata defining the source data it relates to; and/or wherein each report hypothesis has associated metadata defining which direct hypotheses were in the associated subset of direct hypotheses.

In a specific embodiment, the method may further comprise: wherein the machine learning model is the large language model.

According to an aspect there is provided a computer-implemented method of using a large language model to answer queries related to source data using the hypothesis database pre-processed according to the method of the previous aspect. The method comprising: receiving, by the large language model, a user query; accessing the hypothesis database and determining, from the report hypotheses, whether there exists at least one relevant report hypothesis relevant to the user query, wherein; when at least one relevant report hypothesis is determined, generating and outputting, by the large language model, an answer to the user query based on processing the textual summary of the at least one relevant report hypothesis; and when no or insufficient relevant report hypotheses are determined, performing the method of pre-processing according to the previous aspect to generate a relevant report hypothesis, and generating and outputting, by the large language model, an answer to the user query based on processing the textual summary of the at least one relevant report hypothesis.

In a specific embodiment, the method may further comprise: wherein the determining of the at least one relevant report hypothesis comprises determining whether the associated textual summary is relevant to the user query.

In a specific embodiment, the method may further comprise: wherein when no relevant report hypothesis is determined, the generated relevant report hypothesis is based on retrieving a subset of direct hypotheses stored in the hypothesis database for which it is determined the associated textual descriptions are relevant to the user query.

In a specific embodiment, the method may further comprise: determining and storing a current state, wherein the current state comprises for each location region the most recently updated report and/or further report hypothesis.

In a specific embodiment, the method may further comprise: wherein the report and/or further report hypotheses in the current state are used preferentially when answering user queries.

In a specific embodiment, the method may further comprise: wherein each most recently updated report or further report hypothesis may have an associated score defining how recently the report and/or further report hypothesis was updated, and preferably wherein report and/or further report hypotheses with higher scores defining more recent updates may be given a higher contribution weighting when used to answer user queries.

In a specific embodiment, the method may further comprise: when generating a relevant report hypothesis, determining which direct hypotheses to include and/or which report hypotheses to include in the relevant report hypothesis further comprises determining a time-space horizon of hypotheses comprising: for each timepoint in the time range, determining a neighbourhood of hypotheses comprising direct hypotheses and/or report hypotheses relating to locational regions in the vicinity of a particular region range, wherein the size and/or shape of the neighbourhood at each timepoint is variably determined based on the user query.

In a specific embodiment, the method may further comprise: accessing the hypothesis database and determining whether there exists at least one relevant direct hypothesis relevant to the user query, and if so wherein the generating and outputting an answer to the user query is further based on processing the textual description of the at least one relevant direct hypothesis.

In a specific embodiment, the method may further comprise: wherein when the at least one relevant report hypothesis comprises a plurality of relevant report hypotheses, further comprising: determining whether the plurality of textual summaries of the plurality of relevant report hypotheses is less than or equal to the context window of the large language model, wherein: if the combined textual summaries of the plurality of relevant report hypotheses is less than or equal to the context window, generating and outputting an answer to the user query based on processing the plurality of textual summaries of the plurality of relevant report hypotheses; and if the combined textual summaries of the plurality of relevant report hypotheses is not less than or equal to the context window, processing by the machine learning model at least some of the plurality of relevant report hypotheses to create a further report hypothesis, the further report hypothesis comprising a textual summary of the textual summaries of the at least some of the plurality of relevant report hypotheses, and generating and outputting an answer to the user query based on processing the textual summary of the further report hypothesis.

In a specific embodiment, the method may further comprise: when the combined textual summaries of the plurality of relevant report hypotheses is not less than or equal to the context window, truncating at least some of the plurality of relevant report hypotheses.

In a specific embodiment, the method may further comprise: wherein the user query relates to at least one of a region, time, object of interest and/or event of interest in the source date; and optionally wherein the user query relates to a prediction of a future event, and the answer comprises information concerning at least one of an event of interest, object of interest, region and/or time information.

In a specific embodiment, the method may further comprise: wherein the user query includes a prompt aspect, wherein the prompt may include a report hypothesis or a human generated report.

In a specific embodiment, the method may further comprise: wherein when the output answers to user queries are automatically determined to relate to a threat, further comprising causing an associated system to output an alert to and/or automatically trigger an action to occur.

According to an aspect there is provided a computer readable medium having stored thereon computer executable instructions to cause a computer system to perform the method of any previous aspect.

Aspects and embodiments herein may provide improved methods and systems for storing and processing data in databases to be accessed by LLMs. They may allow for improved speed of access, be capable of accounting for limited context windows, and/or to provide for improved accuracy responses, especially in databases based on multi-modal input data.

In accordance with aspects and embodiments as disclosed herein, it may be possible to advantageously provide a method of pre-processing data in a database which is to be searched by a user using a LLM, wherein the pre-processing may provide advantageously summarized and condensed information about the source data in the form of reports. Thereby through the use of reports summarizing a large number of hypotheses in the database, aspects and embodiments may advantageously simultaneously provide the ability for the LLM to process a large amount of hypothesis data in the database despite its limited context window (for instance as measured in tokens), but also to do so without sacrificing accuracy and breadth of source data considered as these are summarized in the reports. Hence aspects and embodiments may advantageously provide for faster, more efficient and more accurate LLM processing and outputs when querying data in a database.

Aspects and embodiments may advantageously provide for a memory and processor efficient manner of storing and accessing large quantities of data from multiple sources and in different original formats - audio, image, video, radar etc. In particular, aspects and embodiments may advantageously allow for data in any and multiple formats to be efficiently and effectively processed and input into a database in a text-based format which can be understood and processed by large language models.

Aspects and embodiments may advantageously provide manners of accurately answering user queries despite large quantities of relevant information needing to be taken account of and only a limited context window and processing resources in which to do it. For instance, when a user queries the database and a quantity of relevant information is determined which is too large to be processed by the context window, aspects and embodiments may advantageously condense and summarise the relevant information into reports, and may thereby perform reasoning and processing on top of and using the condensed/summarised report information. Thereby allowing all or a vast majority of the relevant information to be maintained and used to answer user queries, but in a manner that efficiently fits within the context window.

Accordingly, certain aspects and embodiments may advantageously be viewed as methods of iteratively summarizing and condensing relevant information into reports, for instance by different themes, topics, concepts, or groupings, to allow for fast and efficient information retrieval and processing within a limited context window.

Aspects and embodiments may advantageously provide a pre-processing method for generating the reports, which may happen independently of and in the background to any user interaction with the system. Accordingly, aspects and embodiments may advantageously provide a method capable of repeated self-refinement, for instance in response to new data entering the system from a new or existing data source, such as for instance new satellite imagery entering the system and needing to be processed and condensed into reports.

Aspects and embodiments may provide a database of many different summarizing reports, containing summaries of information related to a plurality of different pieces of input data from different sources. The reports may be generated based on a wide range of particular themes or concepts, such as summarizing source data related to particular locations over time, such that the system can advantageously respond quickly to user queries which relate to any of the themes or concepts for which reports have already been generated. Further, reports may be generated based on historic user query usage of the database, thereby learning from user usage, such that the likelihood of being able to answer a user query in future is increased.

Aspects and embodiments may advantageously provide the information in the summarizing reports in a human-readable format, such that users can interrogate and scrutinize the reports automatically generated. Further, aspects and embodiments may thereby advantageously provide information about source data to a user with improved accuracy and relevance. For instance when source data is an image, and a vehicle is detected in an image, it may be considered more accurate to describe the situation in a structured human-readable format such as "there is a vehicle hidden behind a tree at location x,y" than to merely describe the 'hard facts' of 'vehicle at x,y' and 'tree at x,y'.

Aspects and embodiments may advantageously provide the information in summarizing reports in a highly and/or particularly structured manner thereby allowing the summarizing reports to be more quickly, efficiently and easily machine evaluated. For instance, the generation of the summarizing report may be constrained to a particular output scheme, such as for instance JSON, which may for instance have strictly defined fields. This highly structured and predictable output formatting may advantageously allow for faster and more efficient machine parsing and evaluation of the information contained in summarizing reports.

Aspects and embodiments, through the use of large language models, may advantageously provide for additionally contextualizing the information from source data in addition to merely describing it.

Aspects and embodiments may advantageously provide a system for a user to query source data from multiple sources and multiple data formats, and to receive accurate human understandable answers in a fast and efficient manner.

Aspects and embodiments, through the use of large language models, may provide a system capable of outputting predictions about future events in response to user queries and based on the large quantity of historic and live information being input into the system from multiple data sources in the real world, such as satellites and UAVs etc.

### Description of the Drawings

There now follows, by way of example only, a detailed description of preferred embodiments of the present invention, with reference to the figures identified below.
**Figure 1** illustrates a method;
**Figure 2** illustrates a data visualisation;
**Figure 3** illustrates an apparatus;
**Figures 4A and 4B** illustrate a process;
**Figure 5** illustrates a process;
**Figure 6A****6B, 6C and** **6D** illustrate a process;
**Figure 7** illustrates a method;
**Figure 8** illustrates an apparatus.

### Detailed Description

In the following description, functionally similar parts carry the same reference numerals between figures. The following sets forth specific details, such as particular aspects, embodiments or examples for purposes of explanation and not limitation. It will be appreciated by one skilled in the art that other examples may be employed apart from these specific details. Aspects and embodiments of the invention are now described, without limitation and by way of example only, with reference to the accompanying drawings.

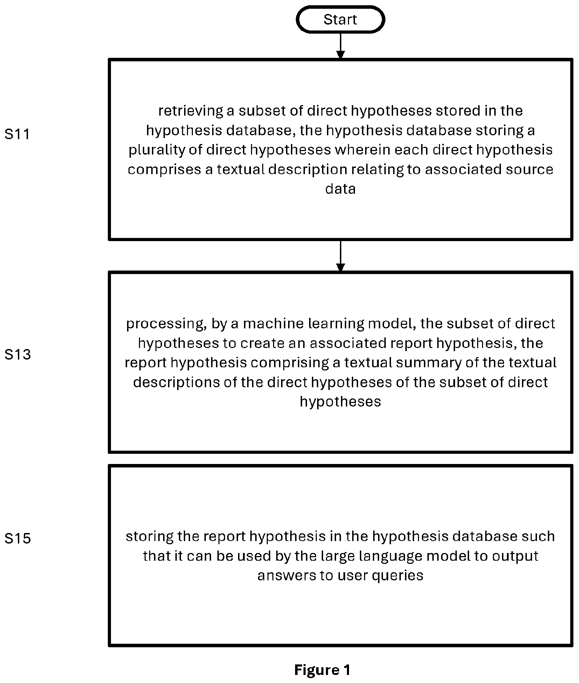

**Figure 1** illustrates a method according to an aspect. In particular, the method is a computer-implemented method of pre-processing data in a hypothesis database configured to be queried by a large language model. The method may be performed using an information processing apparatus as described further below.

Step S11 comprises retrieving a subset of direct hypotheses stored in the hypothesis database, the hypothesis database storing a plurality of direct hypotheses wherein each direct hypothesis comprises a textual description relating to associated source data.

Step S13 comprises processing, by a machine learning model, the subset of direct hypotheses to create an associated report hypothesis, the report hypothesis comprising a textual summary of the textual descriptions of the direct hypotheses of the subset of direct hypotheses.

Step S15 comprises storing the report hypothesis in the hypothesis database such that it can be used by the large language model to output answers to user queries.

Hence aspects and embodiments herein may provide improved methods and systems for storing and processing data in databases to be accessed by LLMs. They may allow for improved speed of access, be capable of accounting for limited context windows, and/or to provide for improved accuracy responses, especially in databases based on multi-modal input data.

In accordance with aspects and embodiments as disclosed herein, it may be possible to advantageously provide a method pre-processing data in a database which is to be searched by a user using a LLM, wherein the pre-processing may provide advantageously summarized and condensed information about the source data in the form or reports. Thereby through the use of reports summarizing a large number of hypotheses in the database, aspects and embodiments may advantageously simultaneously provide the ability for the LLM to process a large amount of hypothesis data in the database despite its limited context window (for instance as measured in tokens), but also to do so without sacrificing accuracy and breadth of source data considered as these are summarized in the reports. Hence aspects and embodiments may advantageously provide for faster, more efficient and more accurate LLM processing and outputs when querying data in a database.

Aspects and embodiments may advantageously provide for a memory and processor efficient manner of storing and accessing large quantities of data from multiple sources and in different original formats - audio, image, video, radar etc. In particular, aspects and embodiments may advantageously allow for data in any and multiple formats to be efficiently and effectively processed and input into a database in a text-based format which can be understood and processed by large language models.

Aspects and embodiments may advantageously provide manners of accurately answering user queries despite large quantities of relevant information needing to be taken account of and only a limited context window and processing resources in which to do it. For instance, when a user queries the database and a quantity of relevant information is determined which is too large to be processed by the context window, aspects and embodiments may advantageously condense and summarise the relevant information in reports, and may thereby perform reasoning and processing on top of and using the condensed/summarised report information allowing all or a vast majority of the relevant information to be maintained and used to answer user queries, but in a manner that efficiently fits within the context window.

Accordingly, certain aspects and embodiments may advantageously be viewed as methods of iteratively summarizing and condensing relevant information into reports, for instance by different themes or groupings, to allow for fast and efficient information retrieval and processing within a limited context window.

Aspects and embodiments may advantageously provide a pre-processing method for generating the reports, which may happen independently of and in the background to any user interaction with the system. Accordingly, aspects and embodiments may advantageously provide a method capable of repeated self-refinement, for instance in response to new data entering the system from a new or existing data source, such as for instance new satellite imagery entering the system and needing to be processed and condensed into reports.

Aspects and embodiments may provide a database of many different summarizing reports, containing summaries of information related to a plurality of different pieces of input data from different sources. The reports may be generated based on a wide range of particular themes or concepts, such as summarizing source data related to particular locations over time, such that the system can advantageously respond quickly to user queries which relate to any of the themes or concepts for which reports have already been generated. Further, reports may be generated based on historic user query usage of the database, thereby learning from user usage, such that the likelihood of being able to answer a user query in future is increased.

Aspects and embodiments may advantageously provide the information in the summarizing reports in a human-readable format, such that users can interrogate and scrutinize the reports automatically generated. Further, aspects and embodiments may thereby advantageously provide information about source data to a user with improved accuracy and relevance. For instance when source data is an image, and a vehicle is detected in an image, it may be considered more accurate to describe the situation in a structured human-readable format such as "there is a vehicle hidden behind a tree at location x,y" than to merely describe the 'hard facts' of 'vehicle at x,y' and 'tree at x,y'.

Aspects and embodiments through the use of large language models may advantageously provide for contextualizing the information from source data in addition to merely describing it.

Aspects and embodiments advantageously provide a system for a user to query source data from multiple sources and multiple data formats, and to receive accurate human understandable answers in a fast and efficient manner.

Aspects and embodiments, through the use of large language models, may provide a system capable of outputting predictions about future events in response to user queries and based on the large quantity of historic and live information being input into the system from multiple data sources in the real world, such as satellites and UAVs etc.

In an optional step following step S15, there further comprises a step of subsequently using the report hypothesis by the large language model to output answers to user queries.

In aspects and embodiments, the term 'pre-processing' may refer to processing of the data in the database (also referred to as hypothesis database) before a user queries the database using the LLM, and/or in the background between user queriers, such that the hypothesis data in the database is advantageously already processed, archived or condensed before a user needs to query the database and therefore is faster and more efficient at the point of use in returning outputs.

As will be described later, the pre-processing method may also additionally be performed in real-time during a user query in certain circumstances to generate reports. Hence the system may perform 'on-demand' processing response to a user query, and also background processing to be able to respond faster to user queries in future.

The database may be any suitable database, as would be understood by the skilled person. The LLM may be any suitable model, as would be understood by the skilled person. For instance, the LLM may be any suitable model capable of receiving, inputting, processing, and outputting text (letters and numbers) based information, for instance human-readable information, for instance in the form of human-readable sentences. The LLM may query the database using any appropriate manner such as Retrieval-Augmented Generation (RAG). The machine learning models and large language models as described herein may be trained in any suitable way.

According to aspects and embodiments, the term 'hypothesis' may be used herein to refer to any data stored in the hypothesis database which is a possible prediction or candidate output for a response to a query a user might input into the LLM. In other words, a hypothesis is any piece of information stored in the database which the system may process and use to respond to user queries received by the LLM. Hence the hypotheses created may be context specific based on what the database is used for or what the intended use-case for the user of the LLM is. Each hypothesis may relate to facts or information about the real world. For instance, when the source data is image data, and the user wishes to query the source image data, the format and content of the hypotheses will relate to text based descriptions of relevant aspects of the source image data which a user may ask about, such as for instance objects or events in the image, the location of the image, the time the image was taken etc. However, regardless of specific format, the hypotheses comprise meaningfully structured data understandable and interpretable to a human, such as for instance, text, sentences, time signatures, location coordinates, numbers, tables etc.

The hypotheses may take a number of different formats. For instance, the hypotheses may be direct hypotheses, which may be used to refer to hypotheses which relate directly to a single piece of source data and are those stored outside of reports. Report hypotheses may be those hypotheses which are a summary or condensed format of a plurality of other hypotheses. For instance, the report hypotheses may be a summary or condensed format of the content and information contained in a plurality of direct hypotheses and/or the content and information contained in a plurality of other report hypotheses. In other words, reports can be made of and from other reports etc. in an iterative or cumulating manner. The wording 'report' and 'report hypothesis' may be used interchangeably herein as any reports generated are themselves hypotheses which can be stored, used and output by the system.

Hence, according to aspects and embodiments, through the use of the report hypotheses this may allow the methods and systems to process information pertaining to a large quantity of source data, thereby maintaining accuracy when a particular user prompt is relevant to a large quantity of source data, by allowing the large quantity of information to fit within the context window in circumstances where processing the original direct hypotheses relating the large quantity of source data would not have fit within the context window.

The source data may be any suitable data. For instance, the source data may be image, audio, video, radar or radio data etc. The source data may be derived from and collected by sensors located in the real world, such as image sensors, cameras, video cameras, microphones, radar etc. For instance, the source data may be image data collected from a satellite or unmanned aerial vehicle (UAV), or may be audio data collected from a microphone located on a vehicle or on the ground, or may be video data collected from a UAV or other vehicle etc. Any suitable source data format can be used. The source data may relate to regions on Earth, in the sky, underwater, in the air, in space, on land or any suitable location. The source data may be any suitable data that includes a spatial dimension and a time dimension. For instance, with audio data the time the audio was taken may be known and the detection area which the microphone is sensitive to detecting may be known, such that a spatial (i.e. location or regional) dimension and time dimensions are known. In the example of an image taken from a satellite or UAV, the boundary of the image forms the spatial dimension and may be defined in longitude and latitude coordinates or in any other suitable manner, and the time the image was taken is known.

In a specific embodiment, the source data is sensor data, preferably image data, and optionally wherein the image data is from a satellite or unmanned aerial vehicle (UAV).

In the description herein, the representative example of the source data being image data will be used and described - which may for instance be static image data from single image captures or may be image frames from video captures - and this data may for instance be from a satellite or UAV. However, as previously described, the aspects and embodiments are not limited to this source data.

The source data may have associated metadata, such as the location it was collected, the time it was collected and the sensor or object that collected it.

According to a specific embodiment, each source data may comprises region data defining the location region the source data relates to (for instance in metadata), and time data defining the timepoint the source data was captured (for instance in metadata); and wherein the textual description of each direct hypothesis comprises a description of a time, a location region and an object or event of interest in the particular associated source data; and wherein the textual summary of each report hypothesis comprises a description of times, location regions and an objects or events of interest in the associated subset of direct hypotheses.

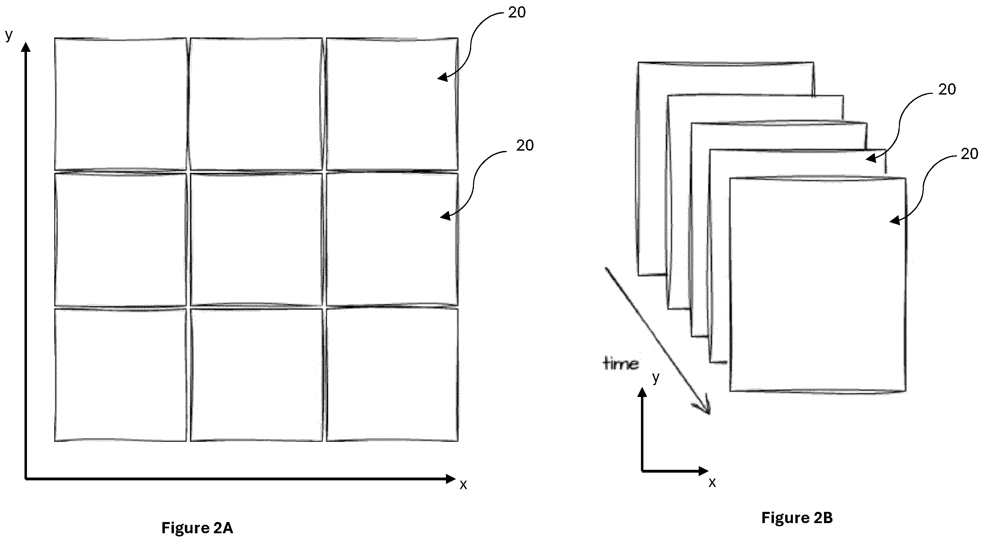

According to aspects and embodiments, the source data having associated location information and time information can be grouped and ordered according to this information. For instance, with image data from a satellite or UAV, the source data may comprise a plurality of images, each image having an associated location captured in the image and time the image was taken. Accordingly, it is possible to group and arrange the source data as image data by location and time. For instance, a number of images may be taken of adjacent locations, at the same time, and these could be grouped together to show a larger area at that point in time as covered by/derived from all the source data images. Alternatively, the same location may be captured in the images at multiple different times, and this too can be grouped. Accordingly, conceptually the source data may be considered to be in a tiled format, with area (i.e. two dimensional x, y coordinate of locations such as latitude and longitude) plotted along one plane, and with time plotted along an axis. A representative abstract visualization space of this is shown in **Figure 2A** and **Figure 2B****,** where **Figure 2A** shows a plurality of source data 20, such as images, relating to different areas (location regions) at the same point in time, and **Figure 2B** shows a plurality of source data, such as images, relating to the same area (location region) at different times. Location regions are areas in the real physical world which source data relates to, for instance the area covered or shown in a particular satellite image.

The source data 20 may be captured and stored in a uniform formatting such as that depicted in **Figure 2** where a particular area size is captured, i.e. if a satellite always takes images of a particular resolution and covering a particular predefined area size. Alternatively the source data may need to be processed before entering systems as described herein such that it is in a uniform formatting as depicted in **Figure 2****,** for instance if a satellite takes very large images of differing sizes some processing comprising breaking down and chunking the data may be required to convert the original source data into uniform formatting of a predetermined fixed area size. Alternatively, even if the source data is captured in a uniform format, it may be advantageous to breakdown the original source data into smaller uniform chunks to allow for more efficient processing by the systems as described herein. For instance, the source data 20 as shown in **Figure 2A** as a whole may have originally been a single image covering a large area at a particular point in time, and processing may have been performed to break the original source data into the plurality of nine source data 20 as shown in **Figure 2A****.** Regardless of the specific arrangement, the size and format of the source data 20 may undergo processing and normalizing before it enters systems as described herein to provide a uniform source data format in this abstract visualization space, i.e. for images these may be processed to cover location region areas of a fixed size, to advantageously allow for increased ease and speed of processing, for instance breaking down the source data into sizes which the resources of the systems described herein can feasibly manage. As described further below, as the direct hypotheses are created from particular source data, the visualisation of this conceptual time-space landscape applies equally and will look the same for direct hypotheses.

As previously described, the database comprises hypotheses including direct hypotheses. The direct hypotheses may each relate to a single piece of source data 20, or may relate to a plurality of pieces of source data 20. The direct hypotheses comprise a textual description related to the associated source data 20. The textual description relates to the information contained in the associated source data, and is any structured and meaningful information. For instance, the textual description may comprise structured data in the form of letters, text, tables, and numbers and is meaningful in that it relates to human understandable information associated with and discerned from the source data, for instance to time signatures, location information, object information or event information in the source data. The textual descriptions are human readable, and may be in the form of sentences. For instance, in the specific embodiment of the source data being image data, the textual description may comprise information relating to what is depicted in the image and when the image was taken. For instance, in a specific example the textual description of a direct hypothesis may take the following form 'vehicle at coordinates (140.6, 105.0) at timestep 3744' etc. where the coordinates and the timestep relate to real locations and real times in the real world as defined in a reference system, and the identification of a vehicle is considered a relevant object or event of interest in the image data. The timestep and the coordinates may be taken from metadata associated with the source data, whereas the determination of the 'vehicle' in the source data may be discerned from the source data using machine learning models as described below. Each hypothesis, such as direct hypothesis or report hypothesis, may have its own associated unique identifier allowing for subsequent identification and referencing.

The direct hypotheses and the textual descriptions they comprise may be determined from and derived from the source data in any appropriate manner. For instance, if the source data in question is not in a LLM readable format (i.e. text), the source data may be processed to convert it into a text readable format. This may be performed by any suitable processing, and may be performed using a machine learning model. For instance, in the particular example of image data, the textual description forming the direct hypothesis may be derived by inputting the image data, and its associated metadata (at least location and time data), though a visual language model (VLM). The VLM extracts in text format the information contained within the image, for instance an object and/or event of interest, such as the example above of the 'vehicle' given above. The uniform processing of the source data as previously described may be useful or required when inputting the source data into a trained machine learning model such as a VLM which needs consistently structured data to process.

By way of example, in a specific embodiment in which the source data being image data, a list of direct hypotheses stored in the database may take the following form, wherein each line is a direct hypothesis relating to a single image and/or relating to a single location region:
- Enemy unit Marine at coordinates (140.6, 105.0) at timestep 3744. Unit tag is 4357095425
- Enemy unit Barracks at coordinates (141.5, 109.5) at timestep 3744. Unit tag is 4351852545
- Enemy unit Marine at coordinates (139.7, 106.2) at timestep 3744. Unit tag is 4357357569
- Enemy unit Marine at coordinates (139.9, 106.9) at timestep 3744. Unit tag is 4358406145
- Enemy unit Supply Depot at coordinates (141.0, 112.0) at timestep 3744. Unit tag is 4349755393
- Enemy unit Barracks at coordinates (143.5, 103.5) at timestep 3744. Unit tag is 8627290128
- Enemy unit Barracks at coordinates (138.5, 108.5) at timestep 3744. Unit tag is 4350803969
- Enemy unit Marine at coordinates (141.4, 105.6) at timestep 3744. Unit tag is 4358144001
- Enemy unit Marine at coordinates (138.9, 105.7) at timestep 3744. Unit tag is 4356308993

It is noted that the objects/events of interest in each of the representative examples as described herein are using terminology from the computer game StarCraft^{®}. This is merely a representative example, as the methods and systems as described herein are applicable to any specific source data, for instance data relating to the real world from real satellite images or UAVs.

Further, the format of the direct hypotheses is not limited, and they may take any appropriate format. For instance, alternatively, the direct hypotheses may be in a different format or grouped in a different way, for instance such as the following examples which are grouped by timestep and may relate to a single associated source data image, or may relate to a group of different source data images at the same time:
- **Timestep 1608:**
   Barracks at (143.5, 103.5)
   Construction Vehicle (CV) at (142.375, 104.625)
- **Timestep 1656:**
   Barracks at (141.5, 109.5) and (138.5, 108.5)
   Supply Depot at (141.0, 112.0)
- **Timestep 1680:**
   Barracks at (138.5, 108.5) and (141.5, 109.5)
   Supply Depot at (141.0, 112.0)
   CV at (142.625, 109.5) and (138.5, 109.41992)
- **Timestep 1704:**
   Barracks at (138.5, 108.5) and (141.5, 109.5)
   Supply Depot at (141.0, 112.0)
   CV at (142.625, 109.5) and (138.5, 107.375)

Alternatively, direct hypotheses may be in the format of large tables of information relating to source data. However, as can be seen, regardless of specific format, the direct hypotheses comprise a textual description, which can be understood by a human and which is structured, and which relates to the content of the associated source data, and for instance includes location and time data associated with the source data and which may be contained in metadata in the source data or may be determined in any appropriate manner from the source data.

Report hypothesis are summaries or condensed compilations of other hypotheses, including direct hypotheses and/or other report hypotheses. These can take a number of different formats, and can be compiled based on subsets of other hypotheses, where the subset is any appropriate concept grouping of the other hypotheses, for instance based on other hypotheses relating to the same location region, other hypotheses relating to the same time, other hypotheses relating to the same sensor, or relating to the same identified objects or events of interest in the source data etc. Specific embodiments for determining and selecting which subsets of hypotheses to include in a report hypothesis are described further herein.

However, regardless of specific format, the reports may be considered a description of a plurality of other descriptions. i.e. the textual descriptions of other hypotheses such as direct hypotheses and report hypotheses. Accordingly, the report hypotheses are advantageously able to summarize a plurality of other hypotheses in a compact, condensed and further human readable form. Advantageously, the use of summarizing report hypotheses allows a large quantity of information associated with a large quantity of source data (as captured by other hypotheses) to be accessed and processed within the limited context window of an LLM, whereas the processing of the original quantity of hypotheses outside of the report may be too large for the context window or at least would regardless take far longer.

For instance, in a specific example of the format of a report hypothesis based on summarizing a plurality of direct hypotheses may be as follows, which is a report generated for hypotheses relating to source data in the time range 1608 to 1944:
Time range: 1608 to 1944:
- Barracks:
   Present at (143.5, 103.5) from 1608 to 1896.
   Present at (141.5, 109.5) from 1656 to 1944.
   Present at (138.5, 108.5) from 1656 to 1944.
- Supply Depot: Consistently located at (141.0, 112.0) from 1656 to 1944.
- CVs:
   Located at (142.375, 104.625) at 1608.
   Located at (142.625, 109.5) from 1680 to 1728.
   Located at (138.5, 109.41992) at 1680.
   Located at (138.5, 107.375) from 1704 to 1728.
- Summary: The enemy has maintained a consistent base structure with a Supply Depot and multiple Barracks at fixed locations. SCVs have been observed moving between nearby coordinates, indicating resource gathering activities. The presence of multiple Barracks suggests potential for unit production.

As can be seen, the report hypothesis example above has a first section laying out a list of objects of interest (Barracks, Supply Depot etc.), the location region they have been detected in (co-ordinates) and the associated timestamps; a second section provides a prose summary of the first section, along with inferences by the LLM about what the cumulative relevance or importance of the summarized direct hypotheses may be (i.e. 'indicating' and 'suggests' etc.). However, this is merely a representative example of a report hypothesis. The report hypotheses may take any form, or varying forms, depending on user requirements and system configurations. For instance, the first section or the second section may be optional, and the information may be ordered or grouped in different manners based on relevant variables the database in question. Further, the second section may be more or less detailed, for instance based on available computational resources, and there may or may not be any inference. Similarly, the format of the report may be dictated by user specifications in the prompt or query, for instance for a more or less detailed report etc., or for other formats and presentations. Regardless, as can be seen from the specific example, the report hypothesis is a condensed or summarized format of the textual descriptions in a plurality of other hypotheses, such as direct hypotheses or report hypotheses. Advantageously, whilst the structure data as embodied in direct hypotheses may contain a lot of 'obsolete' data with respect to a particular criteria or user query - for instance with reference to a particular sorting, grouping or subset criteria - the report can advantageously provide only the relevant information in a more compact form.

Report hypotheses as described herein may advantageously therefore be able to provide a description of the environment in the associated source data and/or the objects or events of interest present. For instance, they may be able to describe how the environment changes over time and how the objects identified change and move through the real-world space (including appearances and disappearances). The description of the environment could, for example, describe any natural barriers that limit the possible paths of the objects, whether the ground type would slow them down or facilitate faster movement, if there are any natural gathering places etc. However these are merely representative examples and any criteria can be chosen.

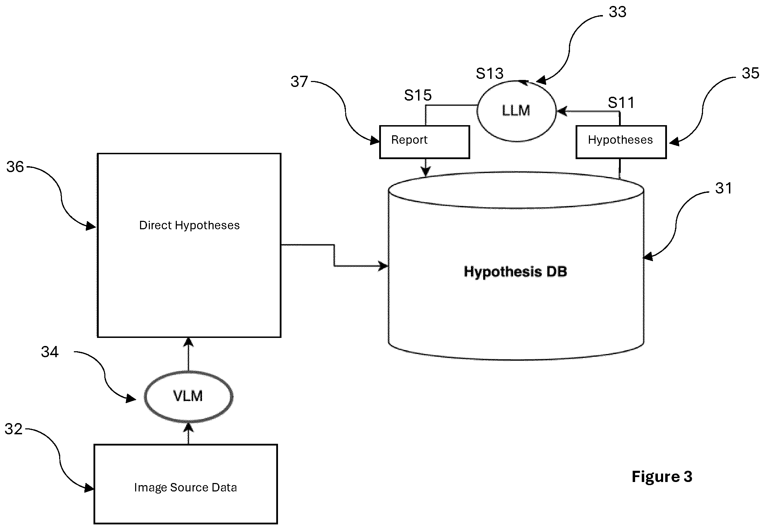

**Figure 3** shows an example system in accordance with a specific embodiment, to be used in accordance with any method as described herein. In particular, a database 31 is shown which is the hypothesis database (hypothesis DB) containing the hypotheses as previously described, for instance the direct hypotheses and the report hypotheses. The LLM 33 may be any LLM as previously described. In accordance with any aspect or method as described herein, **Figure 3** shows a specific embodiment of step S11 in which a subset of the hypotheses 35 in the database 31 are retrieved from the database 31, wherein the hypotheses 35 may include direct hypotheses and/or report hypotheses, and these are input into the machine learning model in the form of the LLM 33. In a specific embodiment of step S13, the subset of hypotheses 35 are processed by the machine learning model in the form of the LLM 33 to create a report hypothesis 37. In a specific embodiment of step S15, the generated report hypothesis 37 is stored in the hypothesis database 31 such that it can be used as a hypothesis to answer future user queries input into the LLM 33.

The machine learning model in the form of the LLM 33 may be the same machine learning model which the user inputs queries into, or may be a different machine learning model.

Hence **Figure 3** in part depicts the pre-processing as previously described, wherein methods and systems as described herein may perform repeated self-refinement in the background to create new report hypotheses based on the direct and report hypotheses stored in the database 31, such that the system is advantageously prepared to provide fast, accurate and efficient answers to user queries. In particular, the provision of the report hypotheses advantageously allows for fast and accurate answers to user queries as they advantageously provide condensed forms of all of the relevant information in the source data relevant to the user query - as captured by the direct and report hypotheses in the database 31 - to fit within the context window of the LLM and therefore to be processed and taken account of in the output answer to the user query.

Hence, according to an aspect, there is provided a system configured to perform the method of any aspect or embodiment described herein. The system may comprises a database, a LLM, processors, computer-readable mediums, and optionally a sensor input, all according to any aspects and embodiments as described herein.

**Figure 3** also depicts the following optional features. The source data is depicted in the specific form of image data 32 being input into the system - the image data being any image data as previously described, for instance including the original image data and associated metadata such as location region, timestamp and provenance (i.e. sensororvehicle or object that took the image). The VLM 34, in any manner as previously described, performs creation of the direct hypotheses 36, and the textual descriptions they comprise, based on the source data 32. The direct hypotheses 36 are then input into the database 31.

According to a specific embodiment, the method may further comprise retrieving a plurality of report hypotheses stored in the database, each report hypothesis created in accordance with any manner as described herein; processing, by the machine learning model, the plurality of report hypotheses to create a further report hypothesis, the further report hypothesis comprising a textual summary of the textual summaries of the plurality of report hypotheses; and storing the further report hypothesis in the hypothesis database such that it can be used by the large language model to output answers to user queries.

Accordingly, aspects and embodiments advantageously allow for reports (further report hypotheses) to be created based on other reports, such that there may be an iterative process of creating reports based on other reports, and thereby advantageously allowing very large quantities of information relating to the source data to be summarized in compact, readily usable, fast and efficient forms.

According to a specific embodiment, the method may further comprise: retrieving a plurality of direct hypotheses stored in the database; wherein the step of processing further comprises processing the plurality of direct hypotheses in addition to the plurality of report hypotheses to create the further report hypothesis, the further report hypothesis thereby comprising a textual summary of the textual summaries of the plurality of report hypotheses combined with the textual description of the direct hypotheses.

Accordingly, aspects and embodiments advantageously allow for reports (further report hypotheses) to be created based on other report hypotheses in combination with other direct hypotheses. Advantageously, this allows aspects and embodiments to create reports using only the specific information of interest regardless of whether that information is in direct hypotheses and/or report hypotheses. Further, advantageously it allows for aspects and embodiments to continuously or in real-time create new reports based on new direct hypotheses that may be being created as new source data is collected and input into the system in any manner as described herein.

According to a specific embodiment, the method further comprises receiving new source data, and creating the new direct hypotheses from the new source data. Further, the method may comprise receiving new direct hypotheses created from new source data; and iteratively performing the pre-processing method as described herein on subsets of direct hypotheses comprising the new direct hypotheses.

Accordingly, aspects and embodiments may advantageously allow for continuous or live creation of new hypotheses based on live input of new source data information received from the real world sensors, and may provide background self-refinement processing and creation of reports based on these newly received and determined direct hypotheses. Hence the system advantageously stays up to date with live and new information and integrates new information into new reports in a dynamic way.

According to a specific embodiment, the subset of direct hypotheses in the created report hypothesis, and/or the plurality of report hypotheses in the created further report hypothesis, may relate to at least one of:
a particular region range comprising at least one location region associated with at least one source data; and
a particular time range comprising at least one timepoint associated with at least one source data; and
wherein determining which direct hypotheses to include in the subset of direct hypotheses comprises determining which direct hypotheses relate to the at least one of the particular region range and/or particular time range based on the textual descriptions of the direct hypotheses; and/or
wherein determining which report hypotheses to include in the plurality of report hypotheses comprises determining which reports hypotheses relate to the at least one of the particular region range and/or particular time range based on the textual summaries of the report hypotheses.

Accordingly, in any of the methods as described herein, the report hypotheses created - regardless of whether they are based on direct hypotheses and/or other report hypotheses - are created based on a subset of other hypotheses, and these summary reports may be created based on a particular criteria or concept they are intended to cover from the source data, and thereby by finding subsets of other hypotheses which fit those criteria. The reports can be defined, and the subsets can be selected, based on any particular criteria, and for instance can based on creating a report for a particular range of locations (location regions), and/or for a particular time range. As such, reports can be created for particular locations in the source data over time, or particular times in the source data for one location, or any combination thereof. Alternatively or additionally, reports can be created based on the criteria of objects or events of interest, i.e. a report may be created based on other hypotheses which relate to 'land vehicles', for instance as determined from the textual descriptions or textual summaries. Alternatively or additionally, the reports can be created based on source data from a particular sensor.

The determining of which hypotheses to include in the report may be based on metadata associated with the hypotheses as previously described, for instance where the metadata comprises location region and time information. The criteria by which reports are defined may be determined in any appropriate manner, and for instance may be automatically determined by analysing trends in the source data, may be determined based on previous user queries in the system, may be determined randomly, may be determined by sequentially processing the hypotheses in different groups i.e. create a report based on location x over time 0 to 3, then create a separate report based on location x for times 4 to 6 etc. Put another way, the report hypotheses may be considered a synopsis of the textual descriptions and summaries of other hypotheses from the source data across time and space. In a further embodiment described herein, a report hypothesis is also created in direct response to a user query, as will be described further below.

The generation of reports in this manner makes them advantageously useful for later used by the system in responding to user queries, as the reports may advantageously already relate to location regions, times, objects and/or events of interest which the user may ask about in their query.

Accordingly, in aspects and embodiments described herein, the generation of the reports may be structured along a specific timeline and/or a specific area. For example, different hypotheses associated with the same location (i.e. image or grid of a video frame) at different points in time can be combined in a report to describe a time dependent situation within the area. Additionally or alternatively, different hypotheses associated with the same point in time and different (i.e. neighbouring) areas can be combined in a report to describe the contextual situation within the area.

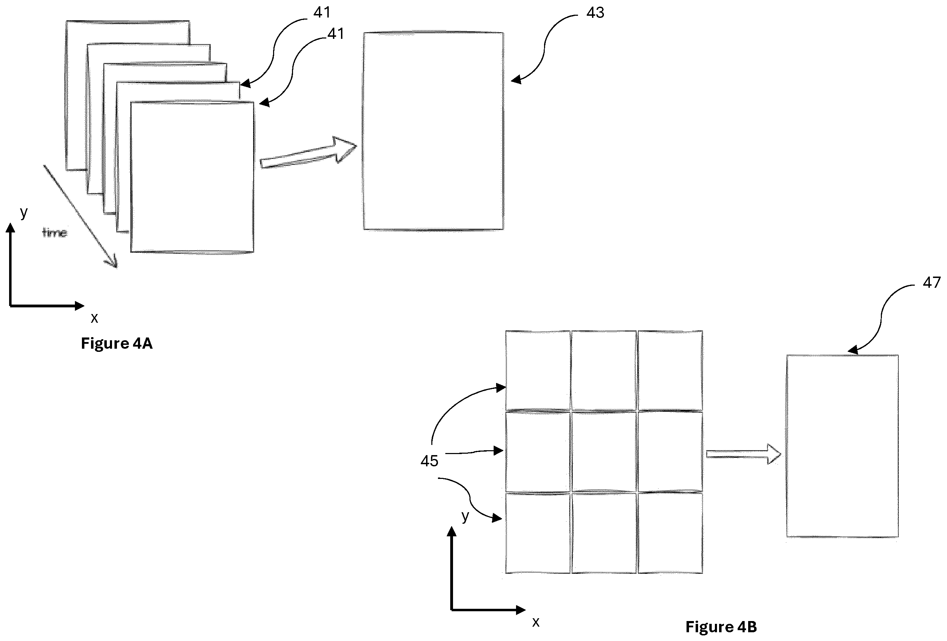

In a specific example, a report hypothesis may be created with a criteria based on a particular location region across time. A representative visualization of this is provided in **Figure 4A** which shows direct hypotheses 41 in a conceptual time-space tile format as previously described with relation to source data 20, the visualization is the same because the direct hypotheses relate to the associated source data and hence can be represented in the same abstract space, as previously described. **Figure 4A** depicts creating a report for a particular location over time, where direct hypotheses 41 relate to the same location region in the source data at different times. These are compiled into a report hypothesis 43. In a specific example, a report hypothesis may be created with a criteria based on the same time across a range of location regions. **Figure 4B** is a representative visualization of this, in which a report 47 is created based on direct hypotheses 45 which are all associated with the same time in the source data but which cover different location regions. Accordingly, the reports created advantageously condense the information from a large number of other hypotheses into a single report, wherein the report can then be used to create other reports and/or for providing responses to user queries in subsequent use of the database.

As shown in **Figure 4B****,** the direct hypotheses 45 may be laid out in a tile format, where analogous to **Figure 2A****,** the tiled format may relate - directly or indirectly - to the real world location regions which the direct hypotheses 45 relate to. In other words, the location of a particular direct hypothesis 45 in the x, y space as depicted may be in the same spatial relation relative to the other direct hypotheses 45 around it as the real world location regions which the information in the direct hypothesis 45 relates to. For instance, in the example of the source data 20 being a satellite image, a first direct hypothesis 45 may contain information relating to/derived from a particular source data 20 of a particular real world location, a second direct hypothesis 45 located further along the x direction relative to the first direct hypothesis 45 may contain information relating to source data 20 from a particular real world location which is further right/east of the first real world location. Hence in this way the tiled format as depicted may conceptually cover and relate to a tiled arrangement of real world locations, such as a large surface area of the Earth as captured by satellite images.

Whilst **Figures 4A** and **4B** are described with reference to direct hypotheses 41 and 45, these direct hypotheses 41 and 45 may equally be report hypotheses, and the report hypotheses 43 and 47 may be further report hypotheses described elsewhere herein. The principles as described in relation to direct hypotheses apply equally to report hypotheses.

The visualizations of **Figure 4A** and **Figure 4B** show only a small number of direct hypotheses being included in a report, however any number may be included. However, a problem may occur when the criteria used to create a report requires accessing a number of direct hypotheses which are too great to fit within the context window of the LLM which is creating the report. Advantageously, methods as described in accordance with aspects and embodiments can account for this situation through the use of the generation of reports based on previous reports and through consideration of the context window.

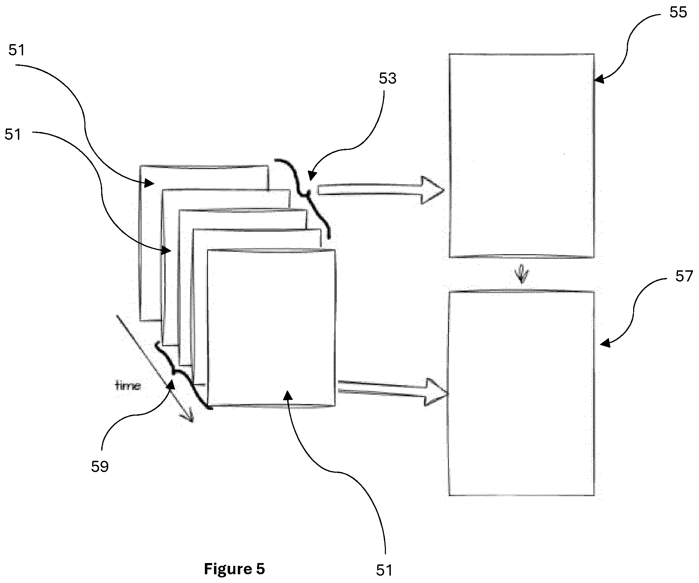

In particular, taking as a representative example the situation of **Figure 4A** in which a report is desired which covers the same location in the source data over a period of time, **Figure 5** shows the example visualization of an instance in which the context window of the LLM cannot accommodate the five representative direct hypotheses 51. Accordingly, based on an assessment of whether or not the textual description of each of the associated direct hypotheses 51 fits within the context window, and a determination that they do not, a subset 53 of the direct hypotheses 51 is selected to first be summarized in an intermediate report hypothesis 55. Thereby, based on the report hypothesis 55, a further report 57 is created which is based on the intermediate report hypothesis 55 based on the subset 53, and which further includes the remaining subset 59 of direct hypotheses which were not include in the report. As shown in the specific embodiment of **Figure 5****,** the subsets 53 and 59 may partially overlap, which may advantageously assist with temporal consistency in the final further report 59.

An analogous method can be performed when the report is designed to cover a plurality of locations at a single time, in line with the visualization of **Figure 4B****,** and will not be described further herein.

Accordingly, by creating an intermediate report 55 using the information contained in the contributing subset 53 of direct hypotheses 51, the information contained in the subset 53 is advantageously condensed and summarized, thereby allowing this information to fit within the context window of the LLM when combined with the remaining subset 59. The size of each of the subsets can be dynamically determined based on the size of the context widow of the LLM. Of course, the process could further be iteratively performed a number of times, i.e. creating multiple reports until these fit sufficiently within the context window of the LLM.

Accordingly, in aspects and embodiments as described herein, the specific size of a context window can be accommodated through the use of dynamic report generation, where different numbers of other hypotheses - such as direct hypotheses or report hypotheses - can be summarized into iterations of different reports in a manner that arrives at a single further report which both fits within the context window of the LLM and which contains all of the information from the required direct hypotheses.

Hence, according to a specific embodiment, the number of direct hypotheses in the subset of direct hypotheses and/or report hypotheses in the further report hypothesis is determined based on the context window of the large language model, and in particular on determining whether the textual summary of the report hypothesis generated based on the textual descriptions of the subset of hypotheses is less than or equal to the context window and/or on whether the textual summary of the further report hypothesis, generated based on the textual summaries of the of the plurality of report hypotheses, is less than or equal to the context window.

In a further still specific embodiment, when it is determined that the textual summary of the report hypothesis generated based on the textual descriptions of the subset of hypotheses is more than the context window, and/or it is determined the textual summary of the further report hypothesis, generated based on the textual summaries of the of the plurality of subset report hypotheses, is more than the context window, then: creating an intermediate report hypothesis including a subset of the subset of direct hypotheses, and/or a subset of the report hypotheses; and creating the further report based on the intermediate report and the remaining direct hypotheses and/or report hypotheses.

In specific embodiments, even a single report hypothesis may be too large for the context window, regardless of whether that report hypotheses is created based only on direct hypotheses, other report hypotheses, or a mixture of the two. According to aspects and embodiments, any report hypothesis as created herein - either a report hypothesis or a further report hypothesis - may be further be assessed for whether it fits within the context window of the LLM, and if not at least one of the following approaches may be taken. First, the report hypothesis in question may be iteratively further processed and summarized, in accordance with any aspect and embodiment as described herein, to create another report being a summary of the first report. Alternatively, or additionally, the report hypothesis in question may be truncated to a size of a sufficient number of tokens as would fit within the context window. It is noted that the context window of the LLM is only one constraint that can be addressed with the methods as described above, and that the same processes may be addressed for any downstream task in which there is a constraint on the fixed number of tokens which can be addressed.

As previously described, reports in accordance with aspects and embodiments herein may be created to summarize information about a particular criterion of interest, such as a report concerning a particular location region over time, or a particular object or event of interest in any location, or a particular object or event of interest in a particular location region over time etc. However, for situations in which a report criterion concerns a location, object or event of interest over time, the problem arises that to provide accurate and useful information about the criterion of interest - such as for instance a particular object such as a vehicle - the further back in time the time range of interest is, the wider the area of locations of concern will be. Put another way, for any criterion of interest in which things change over time - such as a moving vehicle identified in a particular location region - the wider the area of relevance will be for each further step back in time you are interested in, as a greater number of potential other location regions may be of relevance to how the vehicle came to be where it is now, where it has been historically, and where it might be going. In an alternative example, the criterion of interest for a particular report may be how a particular location region has changed over time, and to answer this it is relevant to account for and include hypotheses that relate to the surrounding location regions, for instance to greater or lesser extent over time. Accordingly, for criterion of interest in these circumstances, aspects and embodiments are advantageously capable of creating reports which can dynamically account for the varying relevance of different hypotheses over time.

According to a specific embodiment, when the subset of direct hypotheses and/or the plurality of report hypotheses relate to a particular time range comprising a plurality of timepoints associated with a plurality of source data, the determining which direct hypotheses to include and/or which report hypotheses to include further comprises determining a time-space horizon of hypotheses, for each timepoint in the time range, comprising: determining a neighbourhood of hypotheses comprising direct hypotheses relating to location regions in the vicinity of the particular region range, and/or determining a neighbourhood of report hypotheses comprising report hypotheses relating to location regions in the vicinity of the particular region range, wherein the size and/or shape of the neighbourhood at each timepoint is variably determined based on a criterion of interest.

In particular, in a specific example it is desired to make a report comprising information for a particular region range over a particular time period. To create this report, subsets of hypotheses - direct hypotheses or report hypotheses - have to be determined which relate to the location regions within the region range over the particular time range. Further, as previously explained, to fully and accurately provide information about the desired region range over time, some account must be taken of the neighbourhood of location regions which are in the vicinity of or centered on the particular region range, but which are outside it - as each location is affected by events around it. Further still, the neighbourhood of relevance will change the further back in time the time range is concerned with, for instance in the simplest example the neighbourhood of location regions will get larger the further back in time. Hence to create the desired report, determining which subsets of hypotheses - direct hypotheses or report hypotheses - to include in the report may include dynamically determining the neighbourhood of hypotheses which are relevant at each different timepoint, where the neighbourhood of hypotheses defines those hypotheses which are associated with the location regions in the vicinity of - for example in and around - the region range of interest. The dynamic determination of the size and/or shape of the neighbourhood of interest at each different time point is based on at least the criterion of interest which defines the focus and subject of the report.

For instance, the criterion of interest may be an object of interest, an event of interest, or a location region. Specific examples of the criterion of interest may be: an object of interest may for instance be a moving vehicle or a static building, an event of interest may be a gathering of people, a location region may be a defined location region in the real world. Each of these are subject to change over time. Further still, the historic perspective provided by the time-space horizon also advantageously allows for more accurate predictions of object of interest, an event of interest, or a location regions as will be described further below.

For instance, the size and/or shape of the neighbourhood is increased by a factor depending on how old the timepoint is, for instance the factor is linear or exponential.

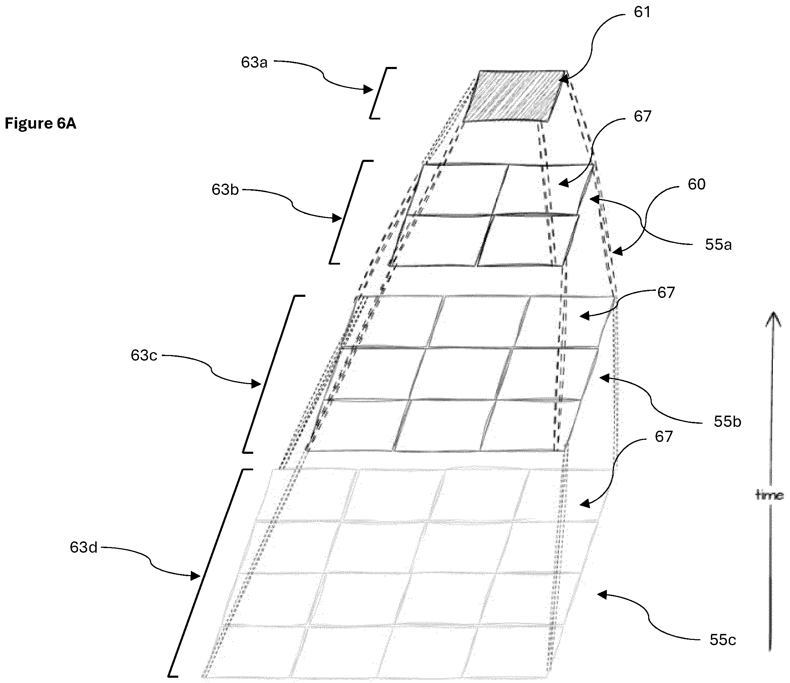

**Figure 6A** is a representative visualization of a time-space horizon 60 of the location regions relevant and included in a particular report, wherein the neighbourhood of hypotheses used to generate the particular report is variably determined based on a criterion of interest. In particular, the report - not shown - is defined for a criterion of interest which starts from location region 61 at particular point in time, and the hypotheses associated therewith, and includes all of the hypotheses associated with the location regions 67 of each of the timepoints 63 in the time-space horizon. At each point in time 63 ('d' being earlier in time, further into the past, than 'a' etc.), the associated neighbourhood 55 of location regions 67 and associated hypotheses is of a differing size and/or shape. The embodiments of the time-space horizon 60 are not limited to any particular size or shape, however **Figure 6A** shows a representation of a simple pyramid, where the size of the neighbourhood is doubled at each further timepoint into the past. In this particular example, the criterion of interest may for instance be related to summarizing the movements of vehicles in the location region 61 and how they got to be in location region 61. Hence the final report created will advantageously include all of the hypotheses 67 as shown in each of the different neighbourhoods 55, to accurately satisfy the criterion of interest, wherein the neighbourhood 55 at each time point is variably determined based on the criterion of interest. It is noted that each location region 61 may have an associated plurality of relevant direct hypotheses and/or report hypotheses, even for a single point in time, as these may for instance have come from different sources - i.e. a photograph of location region 61 from a UAV and separately from a satellite, each having associated hypotheses.

The variable determination of the neighbourhoods at each different time point may be performed in any suitable manner. For instance, when the criterion of interest relates to an object of interest such as a missile, knowledge of the fast-moving nature of the missile means that for each timepoint back in time the missile may have moved a considerable distance from the original location region, and hence the size and shape of the time-space horizon may change dramatically through time. For instance, whilst the variable determination is based on the criterion of interest, it may also be based on knowledge of the region range, for instance historic information. By way of example, if the region range relates to a particularly dynamic area, where there is lots of activity, objects of interest, or events of interest, then the variable determination at each timepoint may increase the neighbourhood by a larger factor for each incremental point in time to attempt to capture all of the relevant information through time. For a location region which is considered more static, the variable determination may increase the size of the neighbourhood by a smaller factor for each further step back in time.

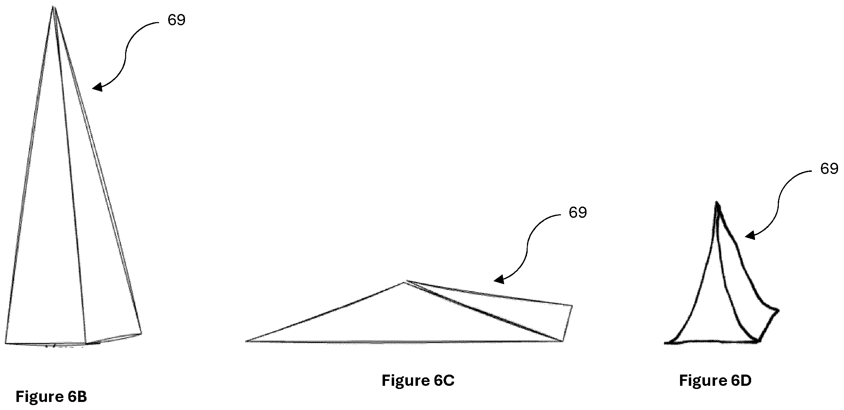

Alternatively, the neighbourhoods do not need to increase going further back in time, and may in some instances may decrease, or a combination of increasing and decreasing, thereby creating concave or convex shaped time-space horizons for hypotheses to be included in the report of interest. **Figures 6B, 6C and 6D** show different example time-space horizons 69a, b, c without the time points or locational regions/hypotheses shown for visual clarity. **Figure 6B** is an example depiction of relatively static world over a longer period of time, **Figure 6C** is an example depiction of a relatively dynamic world over a shorter period of time where the increase in neighbourhood is more dramatic, and **Figure 6D** shows a world which is decreasingly dynamic up to the present point in time.

Similarly, the shape of the neighbourhood at each stage may change. For instance, whilst **Figure 6A** visualizes a square neighbourhood, the neighbourhoods may simply get longer along one axis, for instance where the criterion of interest relates to defining a report for an object of interest such as a vehicle which is moving in a straight line.

The size and shape of the time-space horizon of relevant location regions and associated hypotheses may also be constrained by the size of the context window as previously described. Hence whilst the report based on the criterion of interest should ideally include all hypotheses relating to location regions in the time-space horizon, the time-space horizon and the size of the neighbourhoods may be intentionally curtailed or reduced to limit the number of hypotheses requiring to be processed and thereby allowing the information to fit within the context window. Alternatively or additionally, certain neighbourhoods may be summarized in an intermediate report, such as for instance those at timepoints further back in time, and these may therefore be reduced sufficiently to be combined with the remaining hypotheses associated with the location regions in the time-space horizon to allow for the information to fit within the context window.

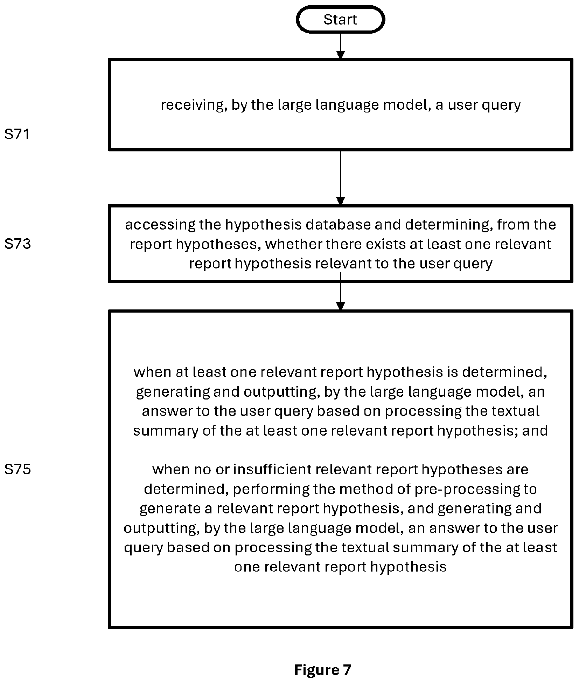

**Figure 7** illustrates a method according to a second aspect. In particular, the method is a computer-implemented method of using a large language model to answer queries related to source data using the hypothesis database as described in any aspect or embodiment herein.

Step 71 comprises receiving, by the large language model, a user query.

Step 73 comprises accessing the hypothesis database and determining, from the report hypotheses, whether there exists at least one relevant report hypothesis relevant to the user query.

Step 75 comprises:
when at least one relevant report hypothesis is determined, generating and outputting, by the large language model, an answer to the user query based on processing the textual summary of the at least one relevant report hypothesis; and
when no or insufficient relevant report hypotheses are determined, performing the method of pre-processing as described in any aspect or embodiment herein to generate a relevant report hypothesis, and generating and outputting, by the large language model, an answer to the user query based on processing the textual summary of the at least one relevant report hypothesis.

It is noted that the method of generating a relevant report hypothesis in the instance in which no or insufficient relevant report hypotheses are determined is performed using the same method to generate a report as described in **Figure 1** - and any other aspect as described herein - but which in this instance is not pre-processing but is instead in response to a user query. Hence with the exception of the timing of the report generation being in response to a user query, the embodiments as described with reference to report generation as described for **Figure 1** and elsewhere herein apply equally here.

Accordingly, methods and systems are provided which allow a user to ask questions in the form of queries using the large language model as previously described to query the database performing pre-processing as described in accordance with any aspect herein, comprising hypotheses - such as direct hypotheses and report hypotheses.

In particular, when a user inputs a query which relates to information in the source data, the method determines whether there is at least one existing report which includes information relevant to answering the user's query, and if so the LLM generates and outputs an answer in response to the user query which is based on the textual summary of the at least one report hypothesis. Of course, more than one report hypothesis may be relevant to the user query, and as such the answer generated and outputted may be based on a plurality of textual summaries of report hypotheses.

In the circumstances in which no relevant report is determined, or simply when an insufficient number is determined (for instance to accurately or comprehensively answer the user's query) the method generates a report on demand, in real time. The generation of this report is performed in accordance with any aspect and embodiment as previously described with regard to the method of pre-processing, where the criterion of interest used to generate the report is derived from the user query.

Additionally, both methods may be employed when there are reports determined to be relevant to the user query, but where additional reports could be generated to further and better answer the user's query.

Accordingly, aspects and embodiments may advantageously be able to use the reports in the pre-processing database to quickly and accurately provide answers to user queries, regardless of the size of the context window of the LLM, and in a manner that encompasses and includes all of the hypotheses relating to all of the relevant source data for the user's query.

Further advantageously, when a user query cannot be sufficiently answered using the available report hypotheses, the system is capable of quickly and accurately preparing a report of relevance using the database of pre-prepared hypotheses.

In a specific embodiment the determining of the at least one relevant report hypothesis comprises determining whether the associated textual summary is relevant to the user query.

In a specific embodiment, when no relevant report hypothesis is determined, the generated relevant report hypothesis is based on retrieving a subset of direct hypotheses stored in the hypothesis database for which it is determined the associated textual descriptions are relevant to the user query.

In a specific embodiment, the method further comprises accessing the hypothesis database and determining whether there exists at least one relevant direct hypothesis relevant to the user query, and if so wherein the generating and outputting an answer to the user query is further based on processing the textual description of the at least one relevant direct hypothesis.

In particular, the answer generated to respond to the user's query may comprise determining and accessing a relevant report, but also determining and accessing direct hypotheses outside of any reports, and compiling this information and outputting an answer to the user. For instance, if a user asks very specific question in the query, or if part of the question in the query is very specific, then there may be a direct hypothesis which pertains directly to this information and the most accurate manner of answering the user query involves processing this direct hypothesis without it's information having been condensed and summarized in a report.

In a specific embodiment, when the at least one relevant report hypothesis comprises a plurality of relevant report hypotheses, further comprising:
determining whether the plurality of textual summaries of the plurality of relevant report hypotheses is less than or equal to the context window of the large language model, wherein:
if the combined textual summaries of the plurality of relevant report hypotheses is less than or equal to the context window, generating and outputting an answer to the user query based on processing the plurality of textual summaries of the plurality of relevant report hypotheses; and
if the combined textual summaries of the plurality of relevant report hypotheses is not less than or equal to the context window, processing by the machine learning model at least some of the plurality of relevant report hypotheses to create a further report hypothesis, the further report hypothesis comprising a textual summary of the textual summaries of the at least some of the plurality of relevant report hypotheses, and generating and outputting an answer to the user query based on processing the textual summary of the further report hypothesis.

Accordingly, in a specific embodiment whilst attempting to generate an answer to the user query, the method takes account of the limited context window it has available to process the relevant hypotheses and provide an answer. In particular, when a plurality of relevant report hypotheses is identified as containing information relevant to answering the user query, if processing all of these relevant report hypotheses would be beyond the capacity of the context window, the method involves creating an intermediate further report of at least some of the relevant report hypotheses summarizing their content and thereby reducing the processing burden whilst also retaining the information in the relevant report hypotheses and thereby accurately and comprehensively answering the user's query. The remaining relevant report hypotheses can be included in the context window and processed along with the intermediate further report hypothesis.

Alternatively or additionally, when the combined textual summaries of the plurality of relevant report hypotheses is not less than or equal to the context window, the method may further comprise truncating at least some of the plurality of relevant report hypotheses.

In a specific embodiment, when generating a relevant report hypothesis, determining which direct hypotheses to include and/or which report hypotheses to include in the relevant report hypothesis further comprises determining a time-space horizon of hypotheses comprising: for each timepoint in the time range, determining a neighbourhood of hypotheses comprising direct hypotheses and/or report hypotheses relating to locational regions in the vicinity of the particular region range, wherein the size and/or shape of the neighbourhood at each timepoint is variably determined based on the user query.

Accordingly, in a specific embodiment, in response to the user query, a time-space horizon of locational regions and their associated hypotheses is determined in a similar manner as previously described with reference to **Figure 6****,** wherein the variable determination of the size of the neighbourhoods of relevance at each timepoint stage is here defined based on the content of the user query analogously as to previously described based on the criterion of interest. The features as described therein in relation to determining the time-space horizon of relevance during the pre-processing method apply equally here to the user search stage, where the criterion of interest is replaced by the user query.

User queries may take any appropriate form. For instance a user query may relate to at least one of a region, time, object of interest and/or event of interest in the source date. For instance, an example user query may take the form of 'tell me what has happened at location x, y over the last two hours'.

In accordance with aspects and embodiments, report hypotheses in the database may be accessed or new reports may be generated to answer this question, where the hypotheses relevant to the user query will be processed and their information factored into the final answer. Advantageously, in the manners as previously described herein, the answers provided to the user may be accurate and comprehensive despite the large amount of potentially relevant hypotheses in the database, as reports summarizing other hypotheses and other report hypotheses can be created in a range of different manners as described herein. Aspects and embodiments may therefore advantageously maintain accuracy, process large amounts of information, and still account for the limited context windows machine learning models, thereby providing faster and more efficient outputs in response to user queries.

In a specific embodiment, the system may create and retain a conceptual understanding of the 'current state' of the real world area which the captured source data relates to, where the 'current state' is defined to the best of its knowledge i.e. based on the most up-to-date source data 20 information it has access to. In particular, this current state may be represented conceptually in a tiled format in a manner as shown in **Figure 2A** and **Figure 4B****,** wherein each tile relates to a particular location region area x, y of the real physical world, and where for each location region area x, y of the real physical world, the most recently generated and/or up-to-date hypothesis (either direct and/or preferably report hypothesis) may be stored. In other words, a conceptual tiling for each location region x, y relating to the real physical world may be created where each tile is a hypothesis created based on the most recently captured source data for that location region in the real world.

This current state may be stored in the tiled format, or may be conceptually understood in the tiled format and may instead be stored indirectly by iteratively identifying/tagging the most recent hypotheses (direct and/or report) as they relate to each location region area of the real world. In other words, as new source data is received and new hypotheses (direct and/or report) are created by the system - in any manner as previously described - the system may continuously update to identify/tag the hypotheses which are the most recent and up-to-date for each location, such that the current state may be stored in the system as being the combination of all of the most recently generated hypotheses for each location region area x, y of the world.

Regardless of the manner of storage, maintaining a current state is advantageous as it allows user queries which relate (at least partially) to the current to be answered with improved speed, efficiency and accuracy. For instance, the hypotheses (direct and/or report) relating to the current state may be accessed directly first, and/or may be given a higher weighting in terms of relevance and consideration when used as part of a process to answer an appropriate user query as described in any manner herein. For instance, when user queries relate to predictions of future events - as described further below - older historical hypotheses are essential to consider in answering such queries, however recent events may be considered more important and of more relevance to what might happen next, hence fast, efficient and easy accessing by the system of the hypotheses relating to the current state is advantageous.

In a specific embodiment, each tile is a report hypothesis summarizing a plurality of text descriptions of direct hypotheses relating to source data from the location region area of the real world which said tile relates to. Alternatively, each tile is a report hypothesis summarizing a plurality of text summaries of report hypotheses relating to source data from the location region area of the real world which said tile relates to.

In a specific embodiment, the system may store a plurality of different current states at different levels of granularity, i.e. wherein each current state may comprise tiles relating to different physical dimensional areas in the real world.

The current state comprises for each tile (i.e. for each location region area of the real world) the most up to date information in report hypotheses relating to the dimensional area the tile relates to, and derived from source data relating to that area. Accordingly, as source data for different areas may be collected at different times, each tile of the current state may have been updated at different times. Hence the current state may not be uniformly up to date for each tile.

The current state may be updated in a manner of different ways. For instance, the current state may be constantly iteratively updated as new source data is received by the system and new hypotheses are generated. Alternatively, the current state may be updated at predetermined times, for instance wherein the system performs an update on each tile at the same time.

Each tile, i.e. each report hypothesis generated for that tile, may be updated based on a number of factors including at least one of: new source data associated with the dimensional area of the real world associated with the tile; new source data associated with the dimensional area of the real world associated with other tiles (e.g. neighboring tiles); and/or updates to reports associated with other tiles (e.g. neighboring tiles). Hence advantageously, reports for a particular tile may be updated not only based on new/more recent source data for that particular tile, but also based on relevant updates relating to other tiles.

In a specific embodiment, each tile may have associated parameters defining the extent to which updates to this tile and the reports in it are affected and updated by: new source data associated with neighboring tiles; and/or new or updated reports are created associated with neighbouring tiles. For instance, a particular tile may be updated when new source data is detected or determined for itself, and/or may be updated when new source data is detected or determined for tiles within a fixed distance of it (e.g. tiles immediately surrounding it), and/or may be updated when new or updated reports are created associated with tiles within a fixed distance of it (e.g. tiles immediately surrounding it).

Each tile, i.e. each report hypothesis generated for that tile, may have an associated score (e.g. 0 to 1) which defines how recently the tile was last updated. The score may decay over time as the report associated with the tile is not updated, where for instance 1 may mean updated very recently and 0 may mean never updated.

The score defining time since last update may be used by the system to determine the priority or weighting given to different reports when answering user queries. For instance, only reports for tiles with a score over a particular threshold may be used, where reports for tiles below the threshold may be considered insufficiently accurate or relevant. Additionally or alternatively, the score may be used as a weighting such that those reports for tiles with a higher score are given more weighting in the answer to particular user queries. Further still, answers (such as predictions) to user queries may be given an associated confidence score which may be based on the scores of the reports going into the answer.

The report associated with each tile may be truncated or be re-summarised into a new further report to fit within a fixed predetermined context window in any manner as previously described. For instance, whilst updating the reports for each tile in any manner as previously described, the new report generated may be longer than a fixed context window, in which case the new report generated may be summarised in a further report or truncated to fit within the context window.

Accordingly, in any manner as described here, aspects and embodiments may advantageously provide a dedicated data structure defining a current state, wherein the current state comprises only the most up to date/recently updated hypotheses (reports or direct hypotheses) associated with each physical real-world location. Hence according to a specific embodiment, a current state is determined and stored, wherein the current state comprises for each location region the most recently updated report and/or further report hypothesis. Optionally, wherein the report and/or further report hypotheses in the current state are used preferentially when answering user queries. Optionally, wherein each most recently updated report and/or further report hypothesis may have an associated score defining how recently the report or further report hypothesis was updated, and preferably wherein report and/or further report hypotheses with higher scores defining more recent updates may be given a higher contribution weighting when used to answer user queries.

Accordingly, aspects and embodiments providing the current state may advantageously provide faster and more accurate answering of user queries, and for instance may advantageously provide a priority and/or weighting of hypotheses which can be used to increase accuracy, efficiency and processing speed.

In a specific embodiment of any aspect or embodiment as described herein, when the user is querying the system, the user query may include further information, such as information specifically defining the report hypotheses, direct hypotheses the user is interested in.

In a specific embodiment, the user query includes a prompt aspect, wherein the prompt may include a report hypothesis or a human generated report. Optionally, the prompt may also include direct hypotheses, for instance those which the user considers of relevance to their query.

In a specific embodiment, information concerning how dynamic or static the area the user is interested in may be included in the prompt, thereby allowing the variable determination of the time-space horizon to be based on user defined information.

In specific embodiments, it may be considered that the report hypotheses generated by the methods herein are similar, analogous or equivalent to human generated reports. Accordingly, in specific embodiments it may be possible to include human generated reports within the database and/or the prompt.

In a specific embodiment, the use case of the systems and methods herein may be to provide predictions about the future. For instance, in the user query, the user may request information concerning what might happen next in a particular location region or to a particular object of interest in the future. Using the machine learning models herein to make predictions based on the hypotheses in the database may be performed in any suitable manner. Further, it is noted that through the use of the time-space horizon and historic information which may be stored by system, it has a wide range of hypothesis information which it can access when attempting to make predictions. The actual mechanism of prediction performed by the machine learning model may be performed in any conventional manner, for instance based on the probability distributions of tokens (for instance words) taken to be candidate answers to the user queries, and selecting the tokens with the highest probability in relation to the user query.

In a specific embodiment, when the output answers to user queries are automatically determined to relate to a threat, further comprising causing an associated system to output an alert to and/or automatically trigger an action to occur.

In particular, the system may be configured to identify certain information in output answers as a potential threat. For instance, the detection of certain objects in certain locations, such as vehicles in a particular location or moving in a particular direction, may be pre-defined as a potential threat and the system may be configured to parse the information output as answers in response to user queries and to determine whether there are any potential threats in the information. If a potential threat is determined, the system may be configured to automatically perform an action, such as outputting an alarm or alert, or issuing output instructions to a separate system to automatically cause an action to occur. For example, if a potential threat is determined in a particular location, an automatic output instruction may be sent to a sensor system to provide further detections in the area of interest, such as for instance automatically sending an instruction to a UAV to move to the location of interest and for instance to perform live or real-time camera detection operations in the area of interest to monitor the associated potential threat and determine further appropriate actions as required.

### Example Computer System implementation

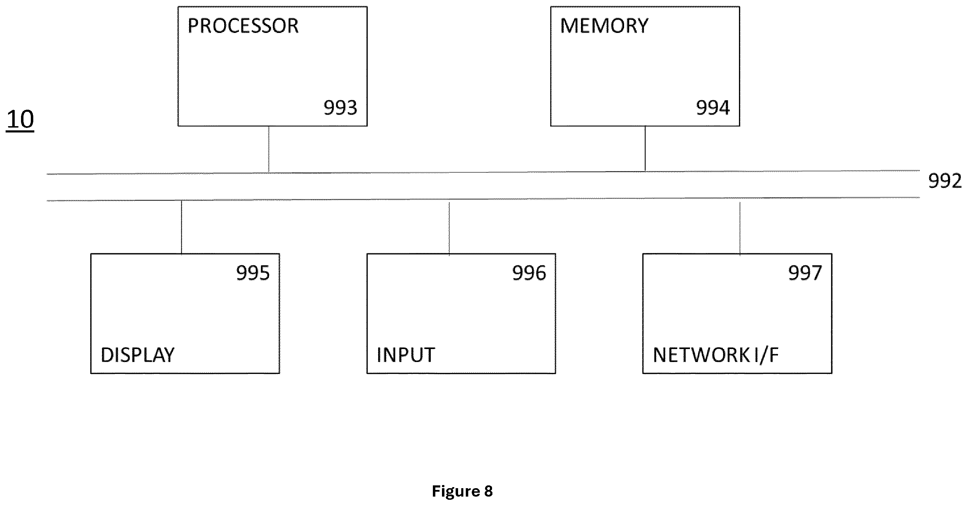

**Figure 8** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above.

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 8****.** Such a computing device need not have every component illustrated in **Figure 8****,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

For the purposes of the present disclosure, the term "machine learning model" encompasses within its scope the following concepts:
- machine Learning algorithms, comprising processes or instructions through which data may be used in a training process to generate a model artefact for performing a given task, or for representing a real world process or system;
- the model artefact that is created by such a training process, and which comprises the computational architecture that performs the task; and
- the process performed by the model artefact in order to complete the task.

References to "machine learning model", "model", model parameters", "model information", etc., may thus be understood as relating to any one or more of the above concepts encompassed within the scope of "Machine learning model".

The above-described embodiments of the present invention may advantageously be used independently of any other of the embodiments or in any feasible combination with one or more others of the embodiments.

### Alternative Embodiments

The embodiments described above are illustrative of, rather than limiting to, the present invention. Alternative embodiments apparent on reading the above description may nevertheless fall within the scope of the invention.

## Claims

1. A computer-implemented method of pre-processing data in a hypothesis database configured to be queried by a large language model, comprising:
retrieving a subset of direct hypotheses stored in the hypothesis database, the hypothesis database storing a plurality of direct hypotheses wherein each direct hypothesis comprises a textual description relating to associated source data;
processing, by a machine learning model, the subset of direct hypotheses to create an associated report hypothesis, the report hypothesis comprising a textual summary of the textual descriptions of the direct hypotheses of the subset of direct hypotheses;
storing the report hypothesis in the hypothesis database such that it can be used by the large language model to output answers to user queries.

2. The computer-implemented method of claim 1, further comprising:
retrieving a plurality of report hypotheses stored in the database, each report hypothesis created in accordance with the method of claim 1;
processing, by the machine learning model, the plurality of report hypotheses to create a further report hypothesis, the further report hypothesis comprising a textual summary of the textual summaries of the plurality of report hypotheses; and
storing the further report hypothesis in the hypothesis database such that it can be used by the large language model to output answers to user queries.

3. The computer-implemented method of claim 2, further comprising:
retrieving a plurality of direct hypotheses stored in the database;
wherein the step of processing further comprises processing the plurality of direct hypotheses in addition to the plurality of report hypotheses to create the further report hypothesis, the further report hypothesis thereby comprising a textual summary of the textual summaries of the plurality of report hypotheses combined with the textual description of the direct hypotheses.

4. The computer-implemented method of any preceding claim, wherein each source data comprises region data defining the location region the source data relates to, and time data defining the timepoint the source data was captured; and
wherein the textual description of each direct hypothesis comprises a description of a time, a location region and an object or event of interest in the particular associated source data, and wherein the textual summary of each report hypothesis comprises a description of at least one time, at least one location region and at least one object or event of interest in the associated subset of direct hypotheses.

5. The computer-implemented method of claim 4 when dependent on any of claims 2 and 3, wherein the subset of direct hypotheses in the created report hypothesis, and/or the plurality of report hypotheses in the created further report hypothesis, relates to at least one of:
a particular region range comprising at least one location region associated with at least one source data; and
a particular time range comprising at least one timepoint associated with at least one source data; and
wherein determining which direct hypotheses to include in the subset of direct hypotheses comprises determining which direct hypotheses relate to the at least one of the particular region range and/or particular time range based on the textual descriptions of the direct hypotheses; and/or
wherein determining which report hypotheses to include in the plurality of report hypotheses comprises determining which reports hypotheses relate to the at least one of the particular region range and/or particular time range based on the textual summaries of the report hypotheses.

6. The computer implemented method of claim 5, wherein when the subset of direct hypotheses and/or the plurality of report hypotheses relate to a particular region range and a particular time range comprising a plurality of timepoints associated with a plurality of source data, the determining which direct hypotheses to include and/or which report hypotheses to include further comprises determining a time-space horizon of hypotheses comprising:
for each timepoint in the time range, determining a neighbourhood of hypotheses comprising direct hypotheses and/or report hypotheses relating to location regions in the vicinity of the particular region range, wherein the size and/or shape of the neighbourhood at each timepoint is variably determined based on a criterion of interest.

7. The computer-implemented method of any of claims 2 to 6, wherein the number of direct hypotheses in the subset of direct hypotheses and/or report hypotheses in the further report hypothesis is determined based on the context window of the large language model, and in particular on determining whether the textual summary of the report hypothesis generated based on the textual descriptions of the subset of hypotheses is less than or equal to the context window and/or on whether the textual summary of the further report hypothesis, generated based on the textual summaries of the of the plurality of report hypotheses, is less than or equal to the context window.

8. The computer-implemented method of any preceding claim, wherein the direct hypotheses and report hypotheses are created from the source data using a second or the same machine learning model configured to convert the source data into the associated textual descriptions.

9. A computer-implemented method of using a large language model to answer queries related to source data using the hypothesis database of any preceding claim, comprising:
receiving, by the large language model, a user query;
accessing the hypothesis database and determining, from the report hypotheses, whether there exists at least one relevant report hypothesis relevant to the user query, wherein;
when at least one relevant report hypothesis is determined, generating and outputting, by the large language model, an answer to the user query based on processing the textual summary of the at least one relevant report hypothesis; and
when no or insufficient relevant report hypotheses are determined, performing the method of any preceding claim to generate a relevant report hypothesis, and generating and outputting, by the large language model, an answer to the user query based on processing the textual summary of the at least one relevant report hypothesis.

10. The computer-implemented method of claim 9 further comprising, when generating a relevant report hypothesis, determining which direct hypotheses to include and/or which report hypotheses to include in the relevant report hypothesis further comprises determining a time-space horizon of hypotheses comprising:
for each timepoint in the time range, determining a neighbourhood of hypotheses comprising direct hypotheses and/or report hypotheses relating to locational regions in the vicinity of a particular region range, wherein the size and/or shape of the neighbourhood at each timepoint is variably determined based on the user query.

11. The computer-implemented method of any of claims 9 to 10, further comprising accessing the hypothesis database and determining whether there exists at least one relevant direct hypothesis relevant to the user query, and if so wherein the generating and outputting an answer to the user query is further based on processing the textual description of the at least one relevant direct hypothesis.

12. The computer-implemented method of any of claims 9 to 11, wherein when the at least one relevant report hypothesis comprises a plurality of relevant report hypotheses, further comprising:
determining whether the plurality of textual summaries of the plurality of relevant report hypotheses is less than or equal to the context window of the large language model, wherein:
if the combined textual summaries of the plurality of relevant report hypotheses is less than or equal to the context window, generating and outputting an answer to the user query based on processing the plurality of textual summaries of the plurality of relevant report hypotheses; and
if the combined textual summaries of the plurality of relevant report hypotheses is not less than or equal to the context window, processing by the machine learning model at least some of the plurality of relevant report hypotheses to create a further report hypothesis, the further report hypothesis comprising a textual summary of the textual summaries of the at least some of the plurality of relevant report hypotheses, and generating and outputting an answer to the user query based on processing the textual summary of the further report hypothesis.

13. The computer-implemented method of any of claims 9 to 12, wherein the user query relates to at least one of a region, time, object of interest and/or event of interest in the source date; and optionally wherein the user query relates to a prediction of a future event, and the answer comprises information concerning at least one of an event of interest, object of interest, region and/or time information.

14. The computer-implemented method of any of preceding claim, wherein when the output answers to user queries are automatically determined to relate to a threat, further comprising causing an associated system to output an alert to and/or automatically trigger an action to occur.

15. A computer readable medium having stored thereon computer executable instructions to cause a computer system to perform the method of any preceding claim.
